(19) **Europäisches Patentamt**

**European Patent Office**

**Office européen des brevets**

(11) **EP 0 585 098 B1**

(12) **EUROPEAN PATENT SPECIFICATION**

(45) Date of publication and mention
of the grant of the patent:
**22.03.2000 Bulletin 2000/12**

(51) Int. Cl.⁷: **G06K 9/00**

(21) Application number: **93306674.8**

(22) Date of filing: **23.08.1993**

(54) **Sign recognition apparatus and method and sign translation system using same**

Gebärdenspracherkennungsgerät und Verfahren und Gebärdensprachübersetzungssystem, das dieses verwendet

Dispositif et méthode de reconnaissance des signes et système de traduction des signes l'utilisant

(84) Designated Contracting States:
**DE FR GB**

(30) Priority: **24.08.1992 JP 24728592**
**03.09.1992 JP 23563392**

(43) Date of publication of application:
**02.03.1994 Bulletin 1994/09**

(73) Proprietor: **Hitachi, Ltd.**
**Chiyoda-ku, Tokyo 101 (JP)**

(72) Inventors:
 • **Sakou, Hiroshi**
 **Booterstown, Co Dublin (IE)**
 • **Sagawa, Hirohiko,**
 **Hitachi Daiyon Kyoshinryo**
 **Kokubunji-shi (JP)**
 • **Abe, Masahiro**
 **Foxrock, Dublin 18 (IE)**
 • **Ichikawa, Akira**
 **Musashino-shi (JP)**
 • **Inoue, Kiyoshi**
 **Toshima-ku, Tokyo (JP)**
 • **Arai, Kiyoshi**
 **Hachioji-shi (JP)**
 • **Shimura, Takanori**
 **Hanamigawa-ku, Chiba-shi (JP)**
 • **Toda, Yuji**
 **Hachioji-shi (JP)**

(74) Representative:
**Calderbank, Thomas Roger et al**
**MEWBURN ELLIS**
**York House**
**23 Kingsway**
**London WC2B 6HP (GB)**

(56) References cited:
 • **SYSTEMS & COMPUTERS IN JAPAN, vol.23, no.3, 1992, NEW YORK US pages 38 - 48 TOMOICHI TAKAHASHI AND FUMIO KISHINO 'A Hand Gesture Recognition Method and Its Application' & DENSHI JOHO TSUSHIN GAKKAI RONBUNSHI, vol.73-D-II, no.12, December 1990 pages 1985 - 1992**
 • **PROCEEDINGS OF THE 1ST INTERNATIONAL CONFERENCE, PIXIM 88, COMPUTER GRAPHICS IN PARIS, 28 October 1988, PARIS, FRANCE pages 345 - 360 F. NOUBOUD ET AL. 'Authentification de signatures manuscrites per programmation dynamique'**
 • **PATENT ABSTRACTS OF JAPAN vol. 16, no. 448 (P-1423) 17 September 1992 & JP-A-04 156 610 (FUJITSU LTD) 29 May 1992**
 • **PATENT ABSTRACTS OF JAPAN vol. 14, no. 462 (P-1113) 5 October 1990 & JP-A-02 183 371 (NEC CORP) 17 July 1990**
 • **IEEE PROCEEDINGS OF THE JOINT CONFERENCE ON NEURAL NETWORKS CAT. NO. 91CH3065-0, vol.1, 21 November 1991, SINGAPORE pages 460 - 466 HIROSHO KOBAYASHI AND FUMIO HARA 'THE RECOGNITION OF BASIC FACIAL EXPRESSIONS BY NEURAL NETWORK'**

**(Cont. next page)**

• IEEE PROCEEDINGS OF THE SECOND CONFERENCE ON ARTIFICIAL INTELLIGENCE APPLICATIONS, THE ENGINEERING OF KNOWLEDGE-BASED SYSTEMS, CAT. NO. CH2215-2/85, 13 December 1985, MIAMI BEACH, FLORIDA, USA pages 666 - 670 K.H.WONG AND F.FALLSIDE 'DYNAMIC PROGRAMMING IN THE RECOGNITION OF CONNECTED HANDWRITTEN SCRIPT'

**Description**

The present invention relates to a continuous sign language recognition apparatus and method. More particularly, the invention relates to a technique of generating reference sign language patterns used for the recognition of continuous sign language patterns through the pattern matching between a continuous sign language and reference sign language. The term "continuous sign language pattern" used in this specification includes also a template pattern.

The present invention also relates to a technique of recognizing a series of continuous sign language patterns which are contained in a sign language and are similar to reference sign language patterns.

The present invention also relates to a sign language translation system in which a recognized sign language is transferred in the system in the form of texts, voices, and sign languages of another type.

As conventional techniques regarding sign recognition, there have been proposed "Hand Motion Recognition Apparatus and Sign Language Translation System" in JP-A-2-144675 (first conventional technique) and "Hand Motion Recognition Method using Neuro-computer" in JP-A-3-186979 (second conventional technique). According to the first conventional technique, colored gloves are used to obtain the positional relation between fingers by an image recognition technique. This positional relation is matched with pre-stored finger spelling patterns to recognize each finger spelling. According to the second conventional technique, the correspondence between finger shape data inputted from glove-like means and the meaning of the finger shape is learnt by a neural network, and an output obtained when inputting the finger shape data is inputted to the network is used as the recognized finger spelling.

"A Hand Gesture Recognition Method and Its Application" has been proposed by Takahashi and Kishino in Systems and Computers in Japan 23(3) pp 1985-1992 (1992). In this method, finger shape data is inputted from glove-like means and hand motion data is inputted via a 3D digitiser. When assessing hand signals involving motion, the hand shape at the start is used as the input. The pattern of the hand shape is not measured as a time sequential series. In a descrimination test, approximately 50% of hand gestures tested were correctly identified.

A reference pattern to be used for the matching between continuous patterns and reference patterns has been obtained heretofore by linearly normalizing sample patterns for the reference pattern in the time axis direction and by simply averaging these normalized sample patterns.

"Motion Recognition Apparatus using Neuro-computer" has also been proposed in JP-A-4-51372 (third conventional technique). According to the third conventional technique which is an improved version of the second conventional technique, a three-dimensional motion is time sequentially detected by using a recurrent type neural network to recognize the meaning of one motion (e.g., of a sign language).

A continuous DP matching scheme has also been proposed as the recognition method through the matching between time sequential continuous patterns and reference patterns ("Continuous Word Recognition using Continuous DP", by OKA, the Speech Study Group of Acoustical Society of Japan, S78-20, pp.145 to 152, 1978) (fourth conventional technique). According to the fourth conventional technique, continuous voice patterns are sequentially matched with reference voice patterns while moving the latter in the time axis direction to recognize reference voice patterns contained in the continuous voice patterns. This matching result is a time sequence of similarities between the continuous patterns and reference patterns. A minimum value of the similarities at a threshold level or lower is searched from the similarity time sequence for each reference pattern, and the time at the minimum value is used to identify a reference pattern candidate.

The first and second conventional techniques for the sign language recognition are mainly directed to finger spellings which are generally static patterns. It is therefore unable to recognize a usual sign language with complicated motions of fingers and hands.

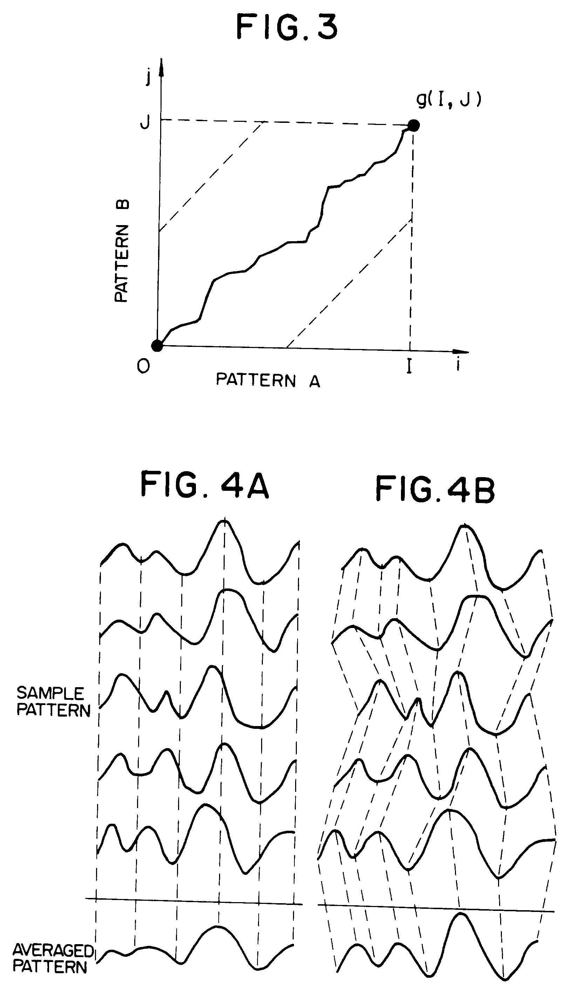

If a reference pattern is obtained from an average of sample sign language patterns by linearly expanding/compressing in the time domain and normalizing them without considering nonlinear expansion/compression, the resultant reference pattern becomes damped and does not reflect the characteristics of original sample patterns as shown in Fig. 4A.

With the third conventional technique, time sequential data of more or less dynamic can be recognized by using a recurrent type neutral network. Although it is possible to recognize time sequential data representing one motion, it is difficult to properly cut out each sign language word from a series of words which are often used in a practical sign language.

With the fourth conventional technique for the matching between continuous patterns and reference patterns, if data of both the continuous patterns and reference patterns sampled at a predetermined timing is used as it is, the time required for the matching increases in proportion to the length of the continuous patterns and the number of reference patterns.

Other issues associated with sign language translation are as follows.

(1) There is a difference, between persons, of finger shapes, hand positions, and their motions. According to the teaching of voice recognition, voices of a known person can be recognized more easily than voices of unknown persons. In the case of finger spellings, the number of finger spellings is as small as 50 words. It is therefore possible to register finger spellings of a particular person, or to learn the weight coefficients of a neural network dedicated to a particular person. However, in the case of a sign language, the number of basic words is as large as 1000 words or more. Therefore, the registration or learning for a particular person is impossible.

(2) Generally, the case where a reference to or a storage of past conversations of a sign language is desired, occurs frequently. However, this function has not been realized as yet.

(3) There are less sign words accompanied with emotions. From this reason, the facial expression or large body motion has been used. However, a normal person generally concentrates on the recognition of a sign language only, and the facial expression or large body motion is often disregarded. Accordingly, in order to realize a natural speech, it is necessary for a sign language translation system to provide a function of translating a sign language with emotion.

It is a first object of the present invention to provide an apparatus and method of sequentially recognizing reference sign language patterns contained in general continuous sign language patterns represented by the motions of fingers and hands.

It is a further object of the present invention to provide a sign language translation system to be used by a plurality of unknown users, capable of recognizing a continuous sign language containing a number of words and having different characteristics, and transferring the recognized sign language in the form of various communication types.

According to the present invention, there is provided a sign language translation system having input means for inputting a continuously expressed sign language as time sequential data, means for recognizing a sign language from said time sequential data, and means for translating said recognized sign language into a spoken language, said sign language recognition means comprising:

a sign language word dictionary for storing first sign language time sequential data of each sign language word;

means for calibrating second sign language time sequential data inputted from said input means so as to make said first sign language time sequential data stored in said sign language word dictionary correspond to said second sign language time sequential data;

means for matching said second sign language time sequential data calibrated by said calibration means with said first sign language time sequential data stored in said sign language word dictionary, and recognizing the sign language word corresponding to said second sign language time sequential data;

means for inputting a portrait of a sign language user, look recognition means for recognizing the look of the portrait to obtain the emotion type and the emotion degree (intensity), and processor means for inputting a spoken language outputted from said spoken language translation means and the emotion type and degree outputted from said look recognition means, and outputting a spoken language added with emotional adjectives.

A reference sign language pattern which may be used in the present invention can be generated as an average of correspondence points between sample sign language patterns, the correspondence points being obtained by a DP matching after normalizing the sample patterns, while considering the nonlinear compression/expansion of the sample patterns.

Reference sign language patterns contained in continuous sign language patterns can be recognized by a continuous DP matching between each continuous sign language pattern and reference sign language patterns while allowing a nonlinear expansion/compression.

The characteristic points are derived from a sign language pattern. These points can be derived as the time when the velocity of an n-th order vector constituting the sign language pattern becomes minimum, the time when the direction change of the velocity vector exceeds a threshold value, the time when an accumulated value of direction changes of the velocity vector exceeds a threshold value, and the time when the acceleration becomes minimum. In accordance with all or some of these characteristic points, the sign language pattern can be efficiently compressed without damaging the characteristics of the sign language pattern, by using all or some of pattern vectors at respective characteristic points, linear approximations of vectors between characteristic points, and time lengths between characteristic points. Each compressed continuous sign language pattern can be matched directly with the compressed reference sign language patterns, reducing the recognition time.

The normalization in the DP matching considering a nonlinear compression/expansion allows to generate a reference sign language pattern without damaging the characteristics of the sign language patterns.

A general sign language with motions of fingers and hands can be continuously recognized by a continuous DP matching between the continuous sign language patterns and reference sign language patterns.

Furthermore, a sign language pattern can be compressed in accordance with the characteristic points specific to the pattern, resulting in an efficient compression without damaging the characteristics. The compressed continuous sign language pattern may be directly matched with the compressed reference sign language patterns, providing a high speed recognition.

Still further, to he used in the present invention there are provided a sign language word dictionary for storing first sign language time sequential data of each sign language word as sign language word dictionary data, calibration means for calibrating second sign language time sequential data inputted as the continuous motions of fingers and hand, so as to make the second sequential data correspond to the first sign language time sequential data, and sign language translation means for matching an output of the calibration means with the sign language word dictionary data and recognizing the sign language data corresponding to the inputted second sign language time sequential data.

There are also provided matching means for receiving the second sign language time sequential data of a sign language word and the sign language word dictionary data corresponding to the second sign language time sequential data, obtaining and outputting correspondences between both the data at each timing, and selection means for selecting one of the inputted second sign language time sequential data and an output of the matching means, and outputting the selected one to the calibration means, wherein the calibration means learns the recognition parameters for the calibration in accordance with an output of the matching means.

A neural network is further provided for learning the recognition parameters for the calibration.

There is also provided spoken language translation means for adding a dependent word to the sign language word outputted from the sign language translation means, in accordance with a rule, and outputting a spoken language.

There are also provided means for inputting a portrait of a sign language user, and look recognition means for recognizing the look of the portrait to obtain the emotion type such as delight and grief and the emotion degree (intensity), wherein a spoken language added with emotional adjectives is outputted by using a spoken language outputted from the spoken language translation means and the emotion type and degree outputted from the look recognition means.

A sign language translation system may be installed at each of a plurality of stations connected to a local area network so that information can be transferred between a plurality of sign language translation systems.

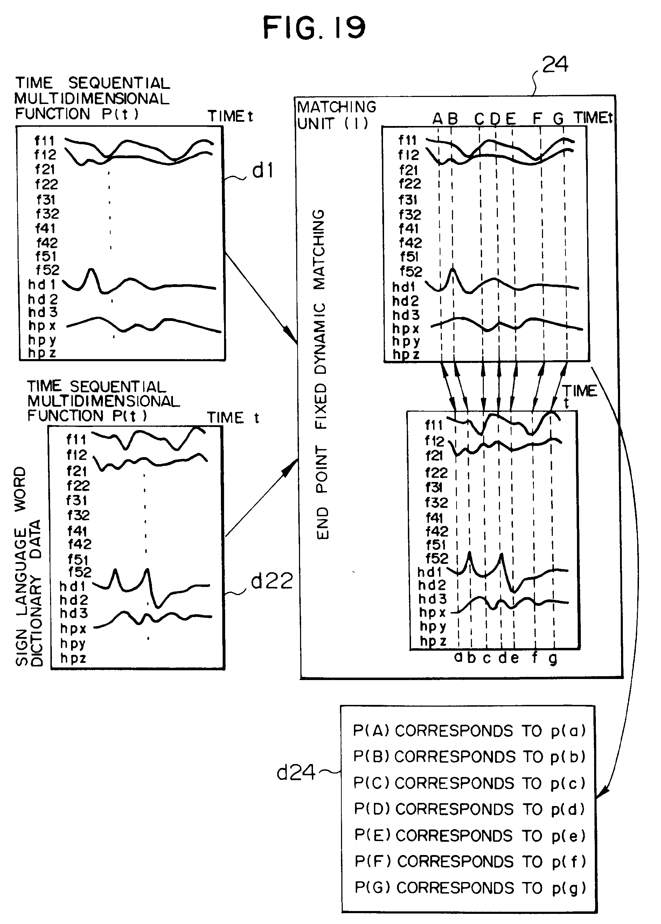

Sign language time sequential data inputted from glove-like data input means may be matched with each sign language word dictionary data while moving the latter in the time domain. The sign language word dictionary data can be matched with the time sequential data at respective maximum similarities (indicated by broken lines in Fig. 19). A characteristic of a sign language specific to each user, i.e. a difference between inputted some sign language word data and the corresponding sign language word dictionary data, can be learnt as a data conversion rule (calibration rule). By using the conversion rule, the sign language can be converted into data more similar to the sign language word dictionary data, improving the recognition precision.

With the look recognition means, the emotion expression can be translated realizing a more natural conversation.

In the drawings:

Fig. 1 shows the structure of a sign language recognition apparatus using a sign language recognition unit 2 which may be used in an embodiment of the present invention;

Fig. 2 is a diagram showing the structure of a reference sign language pattern generating unit 26 of the sign language recognition unit;

Fig. 3 is a diagram illustrating start/end points fixed DP matching;

Fig. 4A is a diagram showing an average pattern when the time axis is linearly normalized;

Fig. 4B is a diagram showing an average pattern when correspondence points between sample patterns are obtained by DP matching;

Fig. 5 is a diagram showing the structure of a pattern compression unit 266 of the reference sign language pattern generating unit 26;

Fig. 6 is a diagram showing the manner how the input sign language pattern is compressed;

Fig. 7 is a block diagram of a continuous sign language recognition unit 28 of the sign language recognition unit 2;

Fig. 8 is a diagram showing an example of DP path used by general continuous DP matching;

Fig. 9 is a diagram illustrating the principle of continuous DP matching;

Fig. 10 is a diagram showing DP paths used in continuous DP matching of a compressed sign language pattern;

Fig. 11 is a diagram illustrating the principle of continuous DP matching of a compressed sign language pattern;

Fig. 12 is a diagram illustrating the correspondence between characteristic points by continuous DP matching;

Fig. 13 is a flow chart illustrating the operation of reference pattern generation;

Fig. 14 is a flow chart illustrating the operation of a pattern compression process;

Fig. 15 is a flow chart illustrating the operation of a sign language recognition process;

Fig. 16 is a diagram showing the whole structure of a sign language translation system 100;

Fig. 17 is a diagram showing a sign language recognition unit 2 which may be used in an embodiment of the invention;

Fig. 18 is a diagram showing the structure of conversion unit 21 of the sign language recognition unit 2;

Fig. 19 is a diagram explaining the operation of a matching unit (1) 24 of the sign language recognition unit 2;

Fig. 20 is a diagram explaining the operation of a matching unit (2) 23 of the sign language recognition unit (2) 23;

Fig. 21 is a diagram showing the structure of look recognition unit 5;

Fig. 22 is a diagram showing the structure of partial image position detection and cut-out unit 41 of the look recognition unit 5;

Fig. 23 is a diagram showing the structure of look matching unit 423 of the look recognition unit 5;

Fig. 24 is a diagram showing the structure of sign language CG generating unit; and

Fig. 25 is a diagram showing an example of the structure of another sign language translation system.

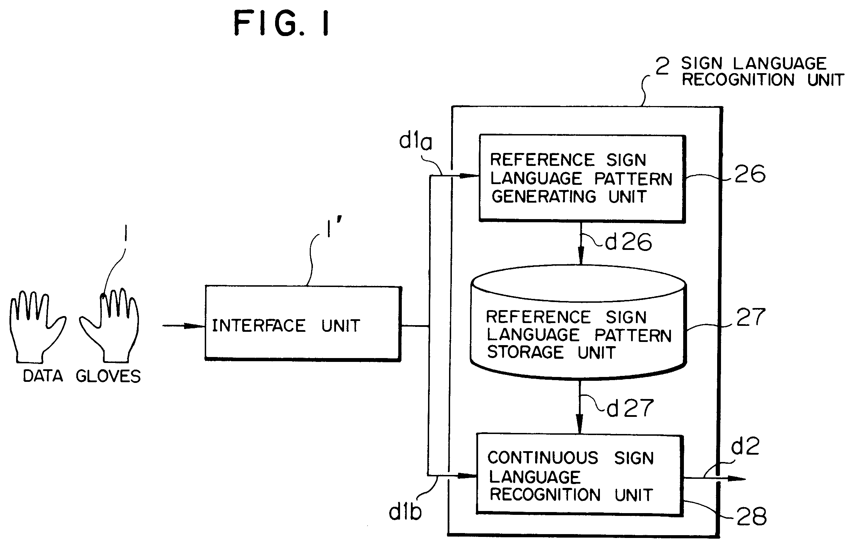

Fig. 1 is a block diagram of a continuous sign language recognition apparatus which may be used in an embodiment of the present invention.

In Fig. 1, reference numeral 1 represents data gloves for inputting a sign language to a computer (Data Glove is a registered trade mark of VPL Research Lab., U.S.A.). Reference numeral 1' represents an interface unit for converting a sign language into a time sequential continuous pattern of n-th order vector, and reference numeral 2 represents a sign language recognition unit. The sign language recognition unit 2 includes a reference sign language pattern generating unit 26, a reference sign language pattern storage unit 27, and a continuous sign language recognition unit 28 for recognizing a continuous sign language pattern.

In this embodiment, by the data gloves 1 and interface unit 1', the bending of the first and second articulations of each finger is detected based upon a difference of light intensity passing through optical fibers attached to the data gloves 1, and the position (spatial coordinates) and direction of each hand are detected by sensors attached to the backs of the data gloves 1. Sixteen data of one hand, and thirty two data of both hands, are picked up about thirty times per second.

A sign language inputted from the data gloves 1 is converted into a time sequential continuous sign language pattern of n-th order vector. The converted continuous sign language pattern is supplied to the reference sign language pattern generating unit 26 as its input signal d1a when a reference sign language pattern is generated, and supplied to the continuous sign language recognition unit 28 as its input signal d1b. The reference sign language pattern generating unit 26 reads several sample sign language patterns of one word of a sign language of a user, and an average of these sample patterns is used as a reference sign language pattern of the sign language word which is then stored in the reference sign language pattern storage unit 27. In this manner, reference sign language patterns for other sign language words are stored in the storage unit 27. The continuous sign language recognition unit 28 recognizes inputted continuous sign language patterns by sequentially matching them with reference sign language patterns d27 stored in the storage unit 27.

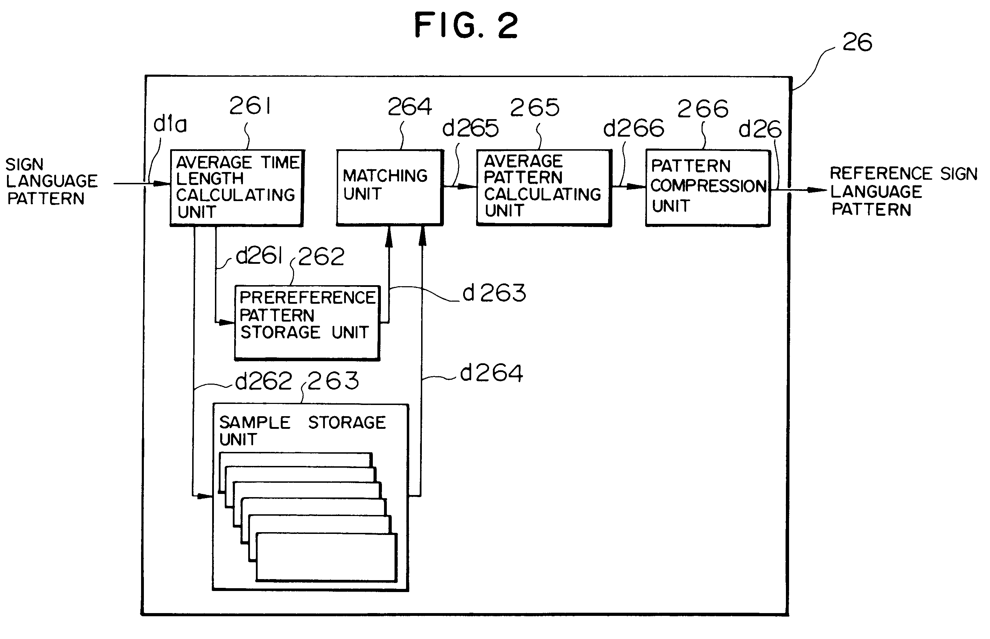

Fig. 2 is a block diagram showing the reference sign language pattern generating unit 26. Reference numeral 261 represents an average time length calculating unit for calculating an average time length of sample sign language patterns for each word inputted several times by a user. Reference numeral 262 represents a pre-reference pattern storage unit for storing one pre-reference sign language pattern selected from the sample sign language patterns inputted several times by the user, the pre-reference pattern being used as a reference of other sample sign language patterns. Reference numeral 263 represents a sample storage unit for storing the other sample sign language patterns excepting the pre-reference pattern. Reference numeral 264 represents a matching unit for checking a matching between the pre-reference pattern and other sample sign language patterns. Reference numeral 265 represents an average pattern calculating unit for calculating an average of inputted several sample sign language patterns of each word, based upon the match results by the matching unit 264. Reference numeral 266 represents a pattern compression unit.

All sample sign language patterns d1a of each word inputted several times to the reference sign language pattern generating unit 26 are supplied to the average time length calculating unit 261. The average time length calculating unit 261 calculates an average of time lengths of all sample sign language patterns of each word inputted several times. The sample sign language pattern having a time length nearest the calculated average time length is stored as the pre-reference pattern in the pre-reference pattern storage unit 262. The other sample sign language patterns excepting the pre-reference pattern are stored in the sample storage unit 263. As the pre-reference pattern to be stored in the storage unit 262, any inputted sample sign language pattern linearly normalized to the average time length may also be used. The matching unit 264 then sequentially matches the respective sample patterns d264 stored in the sample storage unit 263 with the pre-reference pattern d263 stored in the pre-reference pattern storage unit 262. This pattern matching is executed by a dynamic programming (DP) scheme with the fixed start and end points. With this DP scheme, the pre-reference pattern and each sample pattern are matched as shown in Fig. 3 under the limited condition that the start and end points of both the patterns are always the same. With this matching, correspondence points between the pre-reference pattern d263 and the sample patterns 264 are obtained. The matching unit 264 outputs the checked sample pattern and correspondence point information d265. In accordance with the checked sample patterns and correspondence point information d265, the average pattern calculating unit 265 calculates an average of correspondence points and generates an average sign language pattern d266. Therefore, as shown in Fig. 4B, there is obtained the average sign language pattern which maintains the characteristic feature of the sample patterns even if they have nonlinear expansion/compression. The average sign language pattern d266 is then compressed by the pattern compression unit 266. The reference sign language pattern generating unit 26 outputs the compressed average sign language pattern as the reference sign language pattern d26. In this manner, the reference sign language pattern for one sign language word of a user is obtained. Reference sign language patterns of other words to be recognized are also obtained by the reference sign language pattern generating unit 26.

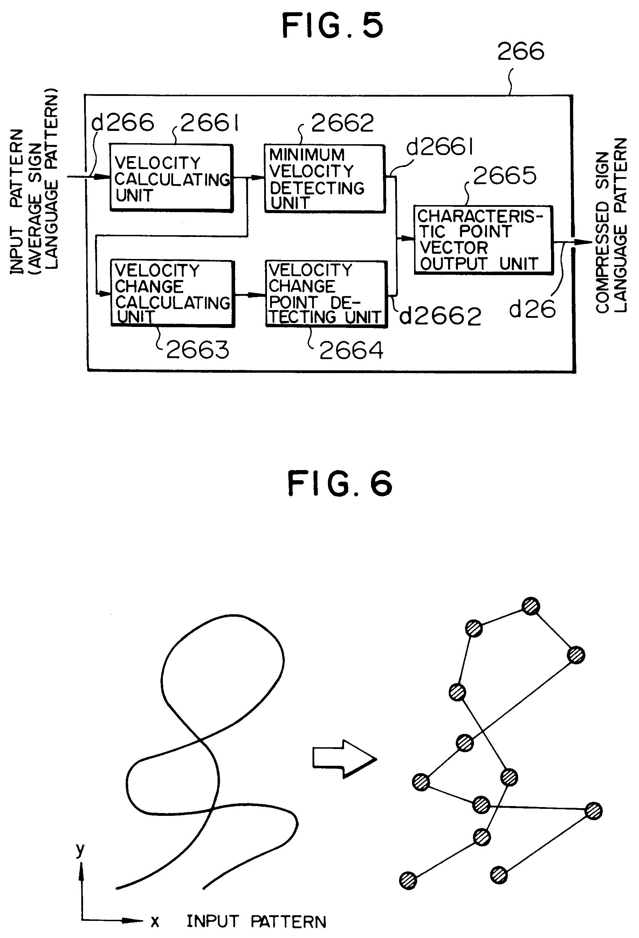

Fig. 5 is a block diagram of the pattern compression unit 266. Reference numeral 2661 represents a velocity calculating unit for calculating a velocity from the time sequence of vectors. Reference numeral 2662 represents a minimum velocity detecting unit for detecting a minimum value of calculated velocities. Reference numeral 2663 represents a velocity change calculating unit for calculating a change in the direction of the velocity. Reference numeral 2664 represents a velocity change time detecting unit for detecting a time when the direction of the velocity changes.

The pattern compression unit 266 compresses the inputted average sign language pattern d266 by detecting characteristic points of the inputted pattern. The velocity calculating unit 2661 calculates the velocity at each timing of the inputted pattern 266. The velocity of vector can be obtained by the following equation (1):

$$\vec{v}(t) = \vec{p}(t) - \vec{p}(t\text{-}1) \tag{1}$$

where $\vec{p}(t)$ is a pattern vector at time t, and $\vec{v}(t)$ is a velocity vector of the pattern at time t.

The velocity at each timing obtained by the equation (1) is inputted to the minimum velocity detecting unit 2662 and velocity change calculating unit 2663. The minimum velocity detecting unit 2662 detects the minimum velocity from the time sequence of inputted velocities, and outputs it as a characteristic point d2661. Namely, the velocity calculating unit 2661 and minimum velocity detecting unit 2662 detect a kind of "pause".

The velocity change calculating unit 2663 calculates a change angle of the direction of the velocity vector. The change angle of the direction of the velocity vector can be obtained by the following equation (2):

$$\theta(\vec{v}(t), \vec{v}(t\text{+}1)) = \arccos \frac{\vec{v}(t) \cdot \vec{v}(t\text{+}1)}{|\vec{v}(t)\|\vec{v}(t\text{+}1)|} \tag{2}$$

where $\theta(\vec{v}(t), \vec{v}(t\text{+}1))$ is an angle between velocity vectors $\vec{v}(t)$ and $\vec{v}(t\text{+}1)$.

Each change angle of the direction of the velocity vector is integrated by the velocity change point detecting unit 2664 which outputs a characteristic point d2662 at which the sum of change angles exceeds a predetermined threshold value. Namely, the characteristic point is represented by a time $T_j$ when the following inequality (3) is satisfied:

$$\sum_{t=T_i}^{T_j} 0(\vec{v}(t), \vec{v}(t\text{+}1)) \geq \Theta \tag{3}$$

where $\Theta$ is a threshold value of the vector change angle. In this manner, such characteristic points are sequentially detected and outputted after the time $T_j$. The velocity change calculating unit 2663 and velocity change point detecting unit 2664 detect a kind of "locus".

A characteristic point vector output unit 2665 outputs pattern vectors at the two characteristic points d2661 and d2662 and the time lengths between characteristic points, as a compressed sign language pattern d26. In this manner, the average sign language pattern is converted into the compressed sign language pattern as shown in Fig. 6. The compressed sign language pattern of each word is stored in the reference sign language pattern storage unit 27.

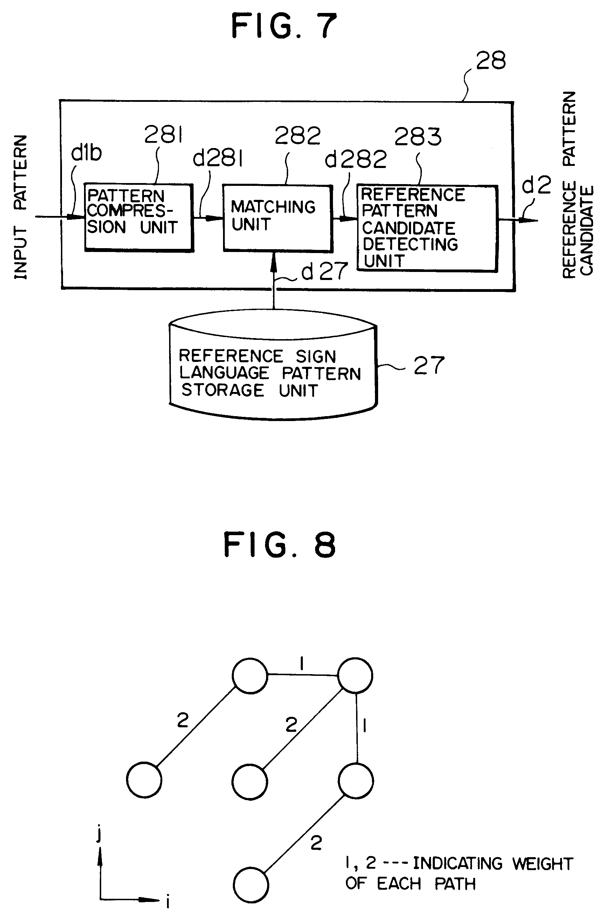

Fig. 7 is a block diagram of the continuous sign language recognition unit 28. Reference numeral 281 represents a pattern compression unit, reference numeral 282 represents a matching unit for checking a matching between a continuous sign language pattern and reference sign language patterns, and reference numeral 283 represents a reference pattern candidate detecting unit for detecting a reference pattern candidate basing upon the match results by the matching unit 282.

A continuous sign language pattern inputted by a user is recognized while referring to compressed reference sign language patterns of respective words.

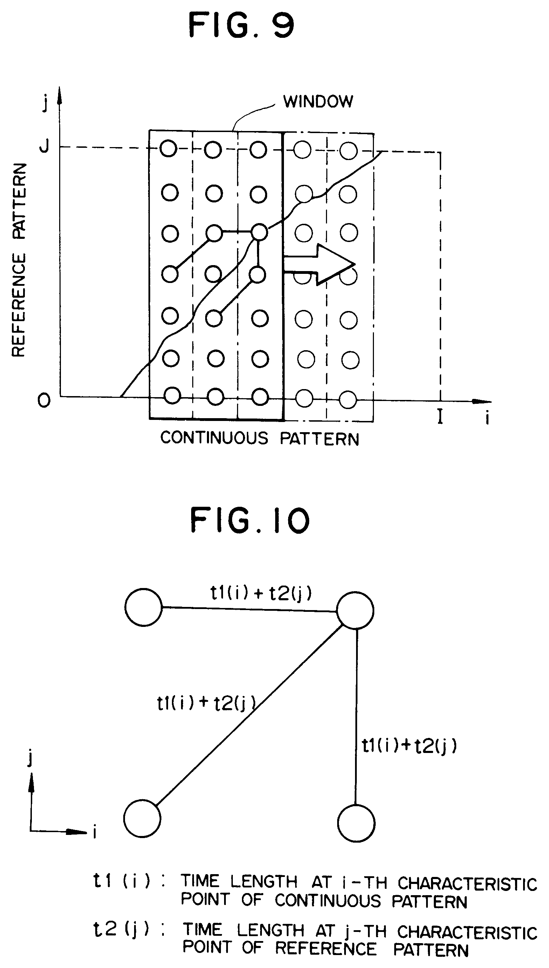

A continuous sign language pattern d1b inputted to the continuous sign language recognition unit 28 is compressed by the pattern compression unit 281. The pattern compression unit 281 is similar to the pattern compression unit 266 used by the reference sign language pattern generating unit 26. The matching unit 282 sequentially matches the compressed continuous sign language pattern with the compressed reference sign language patterns d27 by using a continuous DP scheme while nonlinearly changing the patterns in the time domain. A usual continuous DP scheme uses the restrictions (of DP paths) such as illustrated in Fig. 8 for the vector correspondence between the continuous sign language pattern and reference sign language patterns. In this pattern matching, distances between vectors within a "window" shown in Fig. 9 are repetitively calculated while moving the window. Because patterns nonlinearly compressed in the time domain are directly matched, the restrictions and weights of DP paths shown in Fig. 10 are used. With such restrictions and weights, the correspondence between patterns even if they are nonlinearly compressed in the time domain can be checked. Furthermore, a time length between characteristic points is used as the weight at each path, so that the time length can be reflected upon the distance between corresponding characteristic points for the accumulated distance in the DP matching. However, the correspondence between characteristic points is took even if the difference between time lengths is too large, which may result in unnecessarily expanded/compressed time. From this reason, in addition to the above-described restrictions and weights, a distance corresponding to a ratio between time lengths is added. The distance between characteristic points is therefore given by the following equation (4):

$$d(i,j) = w_1 \times d_1(i,j) + w_2 \times d_2(i,j) \tag{4}$$

where $d_1(i,j)$ is a distance defined by the i-th characteristic point vector of the continuous pattern and by the j-th characteristic point vector of the reference pattern, $d_2(i,j)$ is a distance corresponding to a ratio between time lengths for the distance defined by the i-th characteristic point vector of the continuous pattern and by the j-th characteristic point vector of the reference pattern, and $w_1$ and $w_2$ are weights.

The distance between characteristic points of a vector is represented by a commonly used Euclidean distance. The distance may be defined by Mahalanobis distance or correlation coefficients. As the distance corresponding to a ratio between time lengths may be obtained from the following equation (5):

$$d_2(i,j) = \begin{cases} (r(i,j)-1.0)^2 & ; \ r(i,j) \geq 1.0 \\ \left(\dfrac{1}{r(i,j)}-1.0\right)^2 & ; \ r(i,j) < 1.0 \end{cases} \qquad \cdots \cdots (5)$$

$$r(i,j) = \frac{\displaystyle\sum_{k=i_o}^{i} t_I(k)}{\displaystyle\sum_{k=j_o}^{j} t_J(k)}$$

where $t_I(k)$ is a time length at the k-th characteristic point of a continuous pattern, $t_J(k)$ is a time length at the k-th characteristic point of a reference pattern, $i_0$ is a start point of characteristic points of the continuous pattern corresponding to j, and $j_0$ is a start point of characteristic points of the reference pattern corresponding to i.

In the equation (5), if a characteristic point has a plurality of corresponding characteristic points, the ratio is calculated from the time lengths of all associated characteristic points. The equation (5) is defined by a function which makes the distance corresponding to the time length ratio become 0.0 when the time length ratio is 1.0. Other functions may be used which calculate the distance by using the ratio between time lengths at corresponding characteristic points.

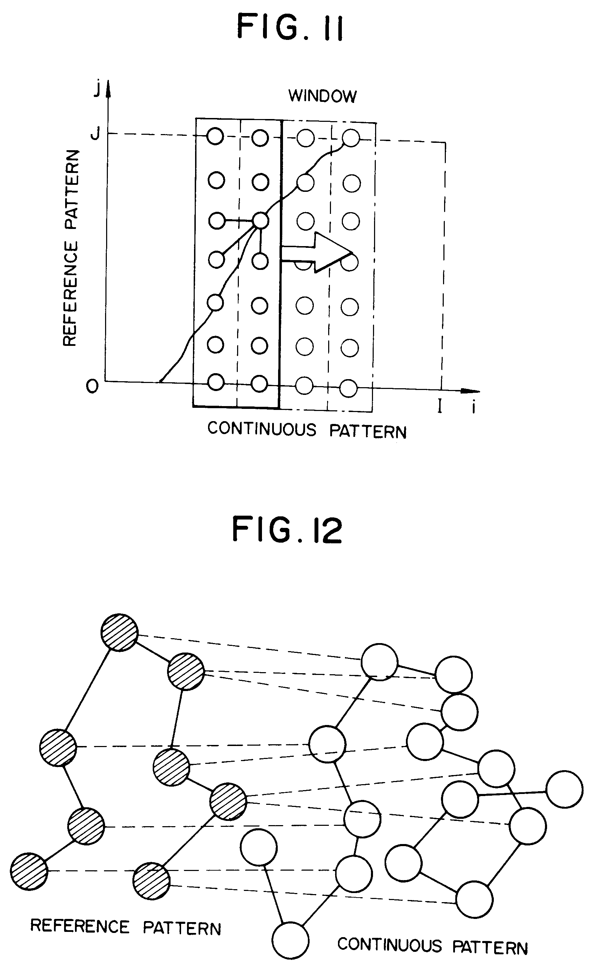

The continuous DP matching with the above-described DP paths and distance calculation is performed by sequentially moving the window shown in Fig. 11. This distance calculation is performed by the following asymptotic expansion equations:

$$D(i,J) = \frac{g(i,J)}{c(i,J)} \tag{6}$$

$$g(-1,j) = g(i,-1) = M \text{ (sufficiently large)}$$

$$g(i,0) = (t_{Ii}+t_{Jo}) \times d(i,0)$$

**8**

$$g_1(i,j) = g(i-1,j) + (t_{Ii}+t_{Jj}) \times d(i,j)$$

$$g_2(i,j) = g(i-1,j-1) + (t_{Ii}+t_{Jj}) \times d(i,j)$$

$$g_3(i,j) = g(i,j-1) + (t_{Ii}+t_{Jj}) \times d(i,j)$$

$$g(i,j) = \begin{cases} g_1(i,j) & ; \min\left\{\dfrac{g_1(i,j)}{c_1(i,j)}, \dfrac{g_2(i,j)}{c_2(i,j)}, \dfrac{g_3(i,j)}{c_3(i,j)}\right\} = \dfrac{g_1(i,j)}{c_1(i,j)} \quad (a) \\[3ex] g_2(i,j) & ; \min\left\{\dfrac{g_1(i,j)}{c_1(i,j)}, \dfrac{g_2(i,j)}{c_2(i,j)}, \dfrac{g_3(i,j)}{c_3(i,j)}\right\} = \dfrac{g_2(i,j)}{c_2(i,j)} \quad (b) \\[3ex] g_3(i,j) & ; \min\left\{\dfrac{g_1(i,j)}{c_1(i,j)}, \dfrac{g_2(i,j)}{c_2(i,j)}, \dfrac{g_3(i,j)}{c_3(i,j)}\right\} = \dfrac{g_3(i,j)}{c_3(i,j)} \quad (c) \end{cases}$$

$$c(-1,j) = c(i,-1) = 0$$

$$c(i,0) = t_{Ii} + t_{Jo}$$

$$c(i,j) = \begin{cases} c(i-1,j) + (t_{Ii}+t_{Jj}) & ; \text{ for } (a) \\ c(i-1,j-1) + (t_{Ii}+t_{Jj}) & ; \text{ for } (b) \\ c(i,j-1) + (t_{Ii}+t_{Jj}) & ; \text{ for } (c) \end{cases}$$

where d(i,J) is an accumulated distance at the i-th characteristic point of the continuous pattern relative to the reference pattern, $t_{Ii}$ is a time length at the i-th characteristic point of the continuous pattern, and $t_{Jj}$ is a time length at the j-th characteristic point of the reference pattern.

A correspondence between characteristic points such as shown in Fig. 12 is obtained by the above-described pattern matching.

By the continuous DP matching, the accumulated distance d282 at each characteristic point is obtained for each reference sign language pattern. The reference pattern candidate detecting unit 283 obtains a minimum value of accumulated distances smaller than a predetermined threshold, the point of the minimum value being detected as the position of the reference pattern candidate. The reference pattern candidate detecting unit 283 outputs as a reference pattern candidate d2 the detected reference pattern, and its start and end points and accumulated distance.

The data gloves 1 and interface unit 1' of the example may be replaced by a different type of device so long as they can convert a sign language into a time sequential continuous pattern of n-th order vector. For example, sign language data picked up by a television camera and converted into time sequential data of n-th order vector may also be used.

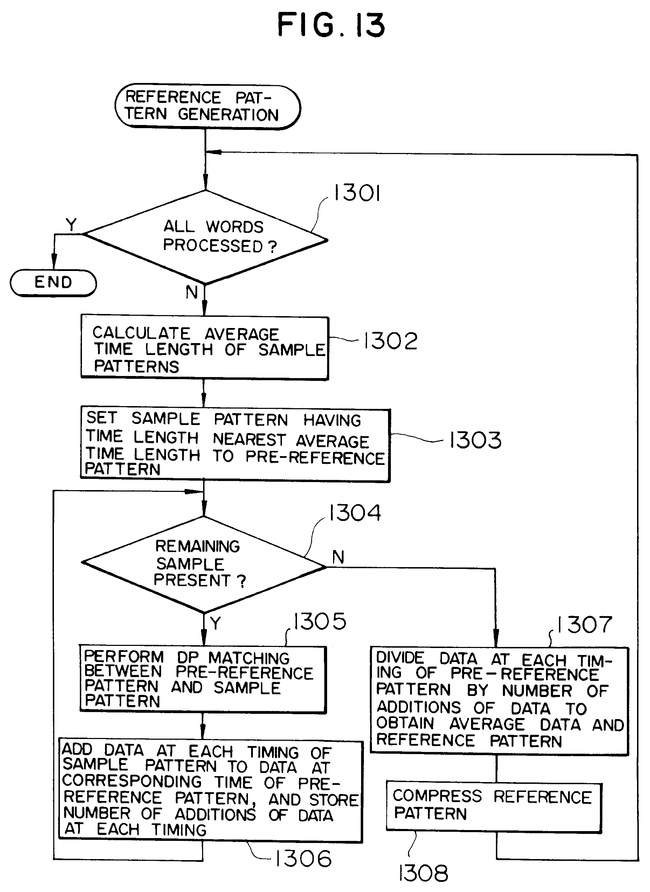

Although the first embodiment is realized by hardware, software may be used. In this case, the reference sign language pattern generating unit, reference sign language pattern storage unit, and continuous sign language recognition unit may be realized flexibly by different computers or by a single computer. Figs. 13 to 15 are flow charts illustrating the operation of the reference pattern generating method and sign language recognition method realized by software.

Fig. 13 is a flow chart illustrating the operation of the reference pattern generating unit. At Step 1301, it is checked whether the reference pattern generating process has been completed for all sign language words for which the reference patterns are to be generated. If completed, the operation is terminated. If not, an average of time lengths of sample patterns of a sign language word is calculated at Step 1302. At the next Step 1303, a sample pattern having a time length nearest the average time length is searched and stored as a pre-reference pattern. At Step 1304 it is checked whether the processes at Steps 1305 and 1306 have been performed for all the remaining sample patterns. If not, at Step 1305 the DP matching with the fixed start and end points between the pre-reference pattern and a sample pattern is executed. At Step 1306, data at each timing of the sample pattern is added to the data at the corresponding time of the pre-reference pattern in accordance with the DP matching results, and the number of data added to the data at the corresponding time is stored. If all the sample patterns have been completed at Step 1304, an average of added data at each timing of the pre-reference pattern is calculated. At Step 1308, the averaged pattern is compressed to use it as a reference pattern.

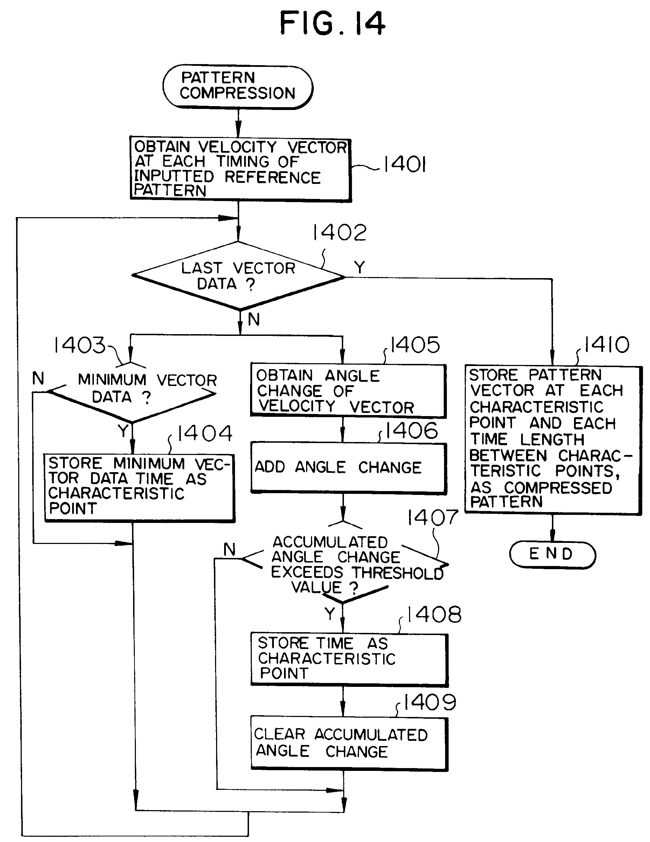

Fig. 14 is a flow chart illustrating the operation of the pattern compression unit. At Step 1401, the velocity vector at each timing is obtained from the input reference pattern, by using the equation (1). At Step 1402 it is checked whether the processes at Steps 1403 to 1409 have been completed for all the timings of the inputted reference pattern. If not, the processes at Steps 1403 and 1404, and the processes from Step 1405 to Step 1409, are executed. At Step 1403 it is checked whether the velocity vector at that time takes a minimum value. If minimum, the time is stored as a characteristic point at Step 1404 and the flow returns to Step 1402. If not minimum, the flow directly returns to Step 1402. At Step 1405, an angle change of velocity vectors at that time and at the preceding time is obtained, by using the equation (2). At the next Step 1406, the angle change at this time is added to the accumulated angle value at the preceding time. At Step 1407, it is checked whether the accumulated value of the angle change has exceeded a threshold value, by using the inequality (3). If in excess of the threshold value, the time is stored as a characteristic point at Step 1408. At the next Step 1409, the accumulated angle change value is cleared to prepare for obtaining the next characteristic point, and the flow returns to Step 1402. In the above operations, returning to Step 1402 is performed only when the processes at Steps 1403 and 1404 and the processes from Step 1405 to Step 1409 are both completed. If it is judged at Step 1402 that the inputted reference pattern has been processed for all the timings, a pattern vector at each characteristic point and a time length between characteristic points are obtained and stored as a compressed pattern at Step 1410.

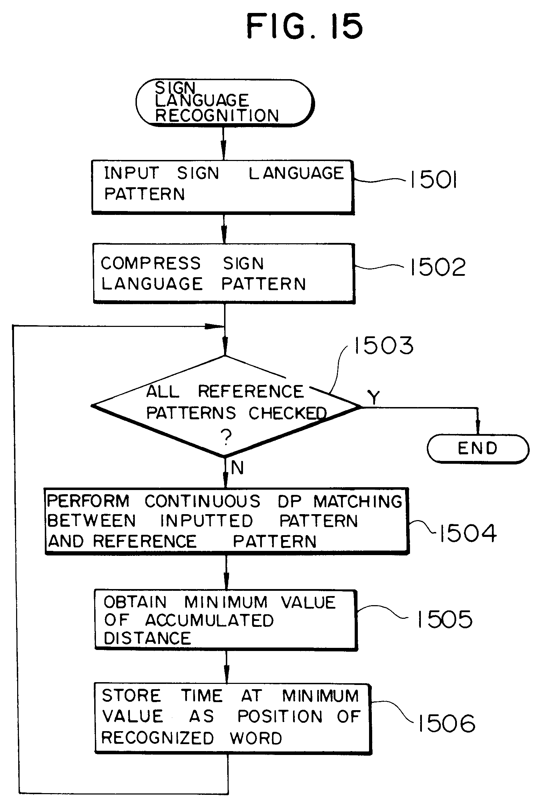

Fig. 15 is a flow chart illustrating the operation of the sign language recognition unit. At Step 1501 a sign language pattern is inputted. The inputted sign language pattern is compressed at Step 1502. It is checked at Step 1503 whether the processes from Step 1504 to Step 1506 have been completed for all stored reference patterns. If there is any reference pattern still not checked, a continuous DP matching is performed between the inputted continuous sign language pattern and the reference pattern at Step 1504, by using the equations (4) to (6). At Step 1505, a minimum value of the accumulated distance is obtained from the time sequential data of the accumulated distance calculated by the DP matching. The time corresponding to the minimum value is stored as the position of the recognized word, and the flow returns to Step 1503. If it is judged at Step 1503 that all the reference patterns have been checked, the sign language recognition process is terminated.

According to the example described above, an excellent reference sign language pattern can be generated by calculating an average of sample sign language patterns based on a correspondence relation obtained through the DP matching, without damaging the characteristic feature of a sign language which might otherwise be damaged by nonlinear expansion/compression in the time domain. Furthermore, a general sign language having a series of motions of fingers and hands can be continuously recognized by the continuous DP matching between continuous sign language patterns and reference sign language patterns. Still further, characteristic points of reference sign language patterns and continuous sign language patterns are derived therefrom, and the patterns are compressed in accordance with the characteristic points. It is therefore possible to efficiently compress sign language patterns, and to recognize sign language patterns at high speed through a direct matching between compressed sign language patterns.

Next, an embodiment of the present invention will be described.

This embodiment basically uses the continuous DP matching of the example above and provides a sign language translation system intended for use by a plurality of different users. This system is an integrated total system for sign language translation wherein not only sign language is inputted from data gloves but also the portrait of a sign language user is inputted to provide the facial expression.

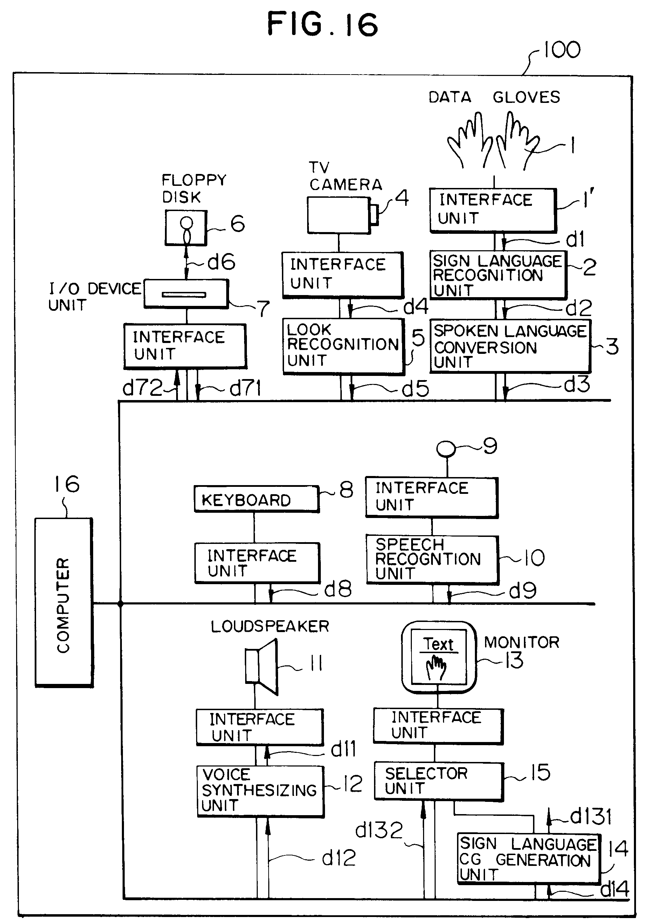

This embodiment of the invention will be described in detail with reference to Figs. 16 to 24. First, referring to Fig. 16, the overall structure of a sign language translation system 100 and the function and data transfer at each element will be described. This system is broadly divided into eight sections, including a sign language recognition section (1, 2, 3), a look recognition section (4, 5), a data input/output section (6, 7), a speech recognition section (9, 10), a keyboard section (8), a display section (13, 14, 15), a voice generating section (11, 12), a processor (computer) section (16).

The operation of the sign language system when used between a sign language user and another person will first be described. In order to translate a sign language given by a sign language user, time sequential information (d1) representing the shapes of fingers and the directions and positions of hands of the sign language user is sent from data gloves 1 to a sign language recognition unit 2 via an interface unit 1'. The sign language recognition unit 2 dynamically matches the time sequential information d1 with sign language word dictionary data to transform the words contained in the information (d1) into symbolized words (d2). A spoken language translation unit 3 converts the sequentially inputted symbolized words (d2) into a spoken language (d3) by supplementing proper particles and the like between words.

In addition to the above, the portrait (d4) of the sign language user is picked up by a TV camera 4. A look recognition unit 5 recognizes the look or emotion (smiling, sad, and etc.) of the face and outputs the degree (d5) of emotion.

If voices are used for the translation output medium, the data (d3 and d5) are supplied to the computer 16 and converted into a spoken language (d12) added with simple emotion-representing adjectives or into voice synthesizing parameters (d12) which are then sent to a voice synthesizing unit 12. In accordance with the converted data (d12), the voice synthesizing unit 12 synthesizes voices having the emotion (d5) corresponding to the spoken language (d3).

If texts are used for the translation output medium, the data (d3 and d5) supplied to the computer 16 are converted into a spoken language (d123) added with simple emotion-representing adjectives, and sent to a monitor 13 to display a text.

If other sign languages are used for the translation output medium, the computer 16 derives words (d14) from the spoken language (d3) added with simple emotion-representing adjectives, and sends them to a sign language CG generating unit 14 to display corresponding sign language words on the monitor 13.

Another person understood the translation output supplied from the translation output medium communicates by using a keyboard 8, a microphone 9, or data gloves 1 (which may be provided at another sign recognition section). For the text conversation, a text (d8) is inputted from the keyboard 8 and displayed on the monitor 13. Alternatively, a text (d8) constituted by only simple words is inputted from the keyboard 8, and converted into corresponding sign language words by the sign language CG generating unit 14 to display them on the monitor 13.

For the voice conversation using the microphone 9, voice data for each word is recognized and converted into symbolized words (d9) by a voice recognition unit 10. The symbolized words are displayed on the monitor 13 in the form of text, or alternatively in the form of corresponding sign language words converted by the sign language CG generating unit 14. For the sign language conversation using the data gloves 1, the sign language is outputted as voices, texts, or sign language words, in the manner described previously.

The computer 16 controls the entirety of the processor section and performs simple data conversion. The voice recognition unit 10 and voice synthesizing unit 12 can be easily realized by using already developed techniques (e.g., "Auditory Sense and Voices", The institute of Electronics and Communication Engineers, compiled by Tanetoshi MIURA, 1980).

In the following, the details of the sign language recognition section (1, 2, 3), look recognition section (4, 5), and data input/output section (6, 7) shown in Fig. 16 will be given.

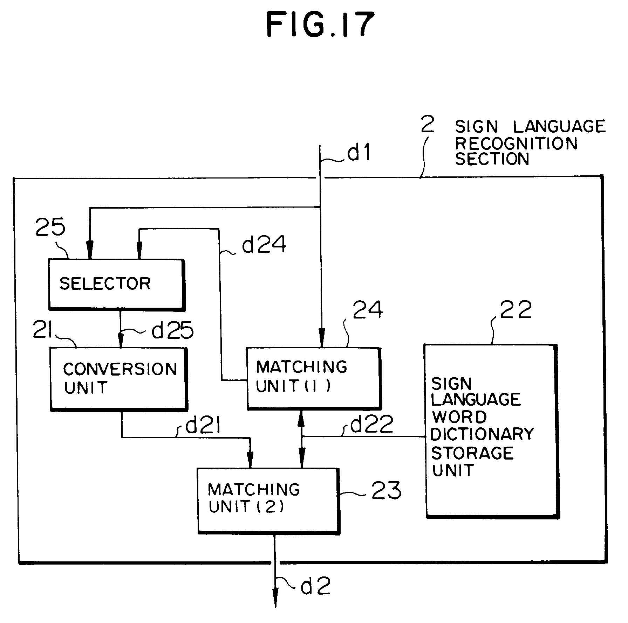

Fig. 17 shows the detailed structure of the sign language recognition unit 2. The functions of the recognition unit 2 include:

Function (1): It is assumed that sign language word data of a first sign language user (or sign language word data common to a plurality of sign language users) has already been registered in a dictionary. Prior to using the sign language of a second sign language user, sign language word data of the second sign language user is picked up from data gloves for a predetermined number of words. The sign language word data of each word is compared with the corresponding data in the sign language word dictionary, and is calibrated to compensate for a personal difference between sign language data, i.e., to make the sign language data of the second sign language user more similar to that of the first sign language user. This calibration is executed only at the set-up of the system.

Function (2): Time sequential sign language word data of the second user after the calibration is dynamically matched with the sign language word dictionary data of the first user to recognize words contained in the time sequential data. Function (2) basically uses the continuous DP matching described with the first embodiment.

The operation of realizing Function (1) will be described.

The second sign language user inputs one sign language word d1 after another among the predetermined words to a matching unit (1) 24. The corresponding sign language word dictionary data d22 is read from a sign language word dictionary storage unit 22 and inputted to the matching unit (1) 24. The matching unit (1) 24 performs a start/end point fixed dynamic matching. The sign language word dictionary storage unit 22 corresponds to the reference sign language pattern storage unit 27 of the first embodiment, and is assumed that reference sign language patterns of the first user (or patterns common to a plurality of users) are stored in correspondence with respective sign language words.

Different from general finger spellings, a sign language word is represented by the motion of fingers and hands. Therefore, as shown in Fig. 19, the data obtained from the data gloves 1 is represented by a time sequential multidimensional function P(t) (a function formed by a number of one-dimensional functions) of f11 to f52, hd1 to hd3, and hpx to hpz. Functions f11 to f52 represent the angles of finger articulations (e.g., f11 represents the finger angle at the first articulation of a thumb, f12 represents the finger angle at the second articulation of the thumb, and f21 to f52 represent the finger angles at the first and second articulations of the other fingers). Functions hd1 to hd3 represent the directions of the palm of a hand, and functions hpx to hpz represent the position of the hand.

The sign language word dictionary data for each word is represented in a similar manner by a time sequential multidimensional function p(t).

The time sequential data only for one hand is shown in Fig. 19 for the purpose of simplicity. In practice, data for both hands is used so that the dimension of the function is doubled.

As shown in Fig. 19, there is certainly a personal difference between the inputted sign language word data of the second user and that of the first user (or average person). To absorb such difference, it is necessary to convert the inputted sing language word data of the second user into corresponding data of the first user. To this end, a start/end point fixed dynamic matching is first executed to obtain optimum correspondence points therebetween.

The start/end point fixed dynamic matching is a kind of dynamic template matching wherein the start and end points of the input data and dictionary data are fixed while the other points are allowed to be moved in the time domain. This dynamic matching may use a known technique (refer to "Pattern Recognition and Learning Algorithms" by Yoshinori KAMISAKA and Kazuhiko OZEKI, Bunichi Sogo Shuppan, p.91).

Several sample words are subject to this matching to obtain correspondence information d24 such as shown in Fig. 19. The information d24 is correspondence data between the input data of the second user and the dictionary data of the first user, and includes as shown in Fig. 19 data P(A), P(B), P(C), P(D), P(D), P(E), P(F), P(G),... and p(a), p(b), p(c), p(d), p(e), p(f), p(g),...

Returning back to Fig. 17, reference numeral 25 represents a selector unit. When Function (1) is to be realized, the selector unit 25 does not select data d1, but selects the correspondence data d24 and sends it to a conversion unit 21.

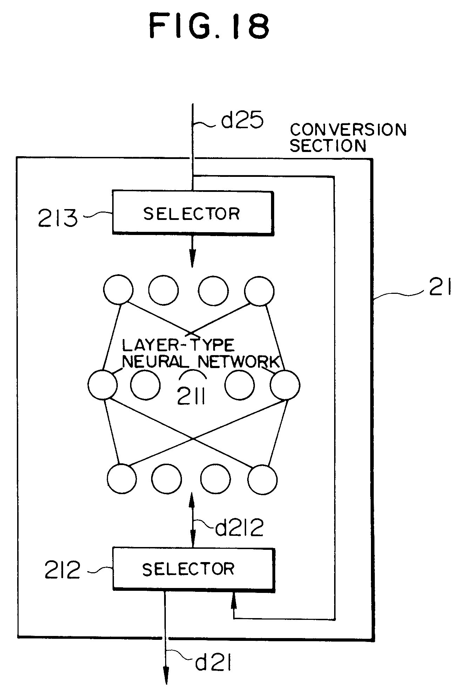

As shown in Fig. 18, the conversion unit 21 includes a layer-type neural network 211 and selectors 212 and 213. In the conversion unit 21, the selector 213 selects the data P(A), P(B), P(C), P(D), P(E), P(F), P(G),... from the inputted data d25 and inputs them to the neural network 211, and the selector 214 uses the data p(a), p(b), p(c), p(d), p(e), p(f), p(g),... as the learning data d212 of the neural network 211.

The leaning of the neural network 211 is made by using the several sample data d25 to obtain weight coefficients of the neural network 211 which define the rule of conversion from the time sequential data P(t) of the second user to the dictionary data p(t) of the first user.

The operation of realizing Function (2) will be described.

In realizing Function (2), the selector unit 25 shown in Fig. 17 selects the data d1, inputs it as the data d25 to the selector 213 shown in Fig. 18. The data d25 selected by the selector 213 is supplied to the neural network 211, and the selector 212 selects the output of the neural network 211 as the data d212 which is outputted as the data d21.

The inputted sign language time sequential data d1 of the second user is a time sequence of words of a sign language, different from the above-described calibration. The time sequential data d1 of the second user is converted by the learnt layer-type neural network 211 into time sequential data d21 with the personal difference being removed. As described previously, this converted time sequential data d21 is similar to the dictionary data of the first user because of Function (1) provided by the neural network 211.

Another matching unit (2) 23 shown in Fig. 17 matches the converted time sequential data d21 with the dictionary data to detect a train of words included in the sign language time sequential data d21.

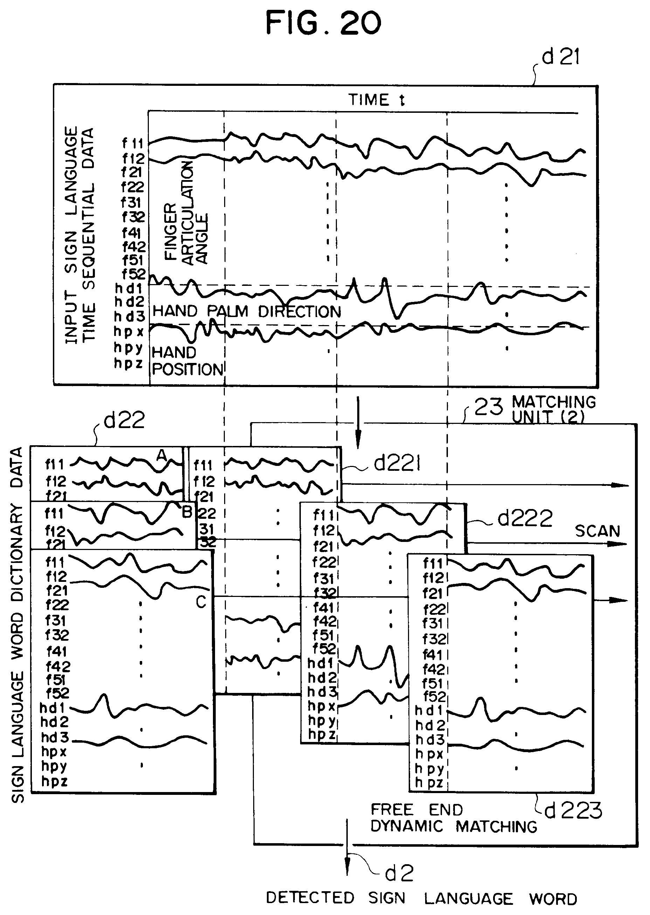

The operation of the matching unit (2) 23 will be described with reference to Fig. 20, the fundamental operation being the same as the first example.

In Fig. 20, d21 represents the inputted sign language time sequential data, and d22 represents the sign language word dictionary data. The inputted time sequential data d21 is represented by a function of a multidimensional time t as described previously. The sign language word dictionary data d22 includes, for example as shown in Fig. 20, data A, B, C,... which are dynamically matched with the inputted time sequential data d21.

This dynamic matching is performed by using a method called a continuous DP matching scheme ("Continuous Word Recognition using Continuous DP", by OKA, the Speech Study Group of Acoustical Society of Japan, S78-20, pp.145 to 152, 1978).

The fundamental operation of this dynamical matching is to scan each sign language word dictionary data on the inputted sign language time sequential data to match the former with the latter at each timing, and to recognize a word in the latter at the position (timing) with the best similarity.

During the matching, expansion/compression is allowed to a certain degree in the time domain. The matching unit (2) 23 outputs time sequentially recognized words as data d2.

A spoken language conversion unit 3 adds dependent words such as articles, prepositions, particles, auxiliary verbs to the recognized words in accordance with the conversion rules, and outputs a symbolized language more similar to a spoken language, as disclosed in U.S. Patent Application Serial No. 08/029046 filed March 9, 1993.

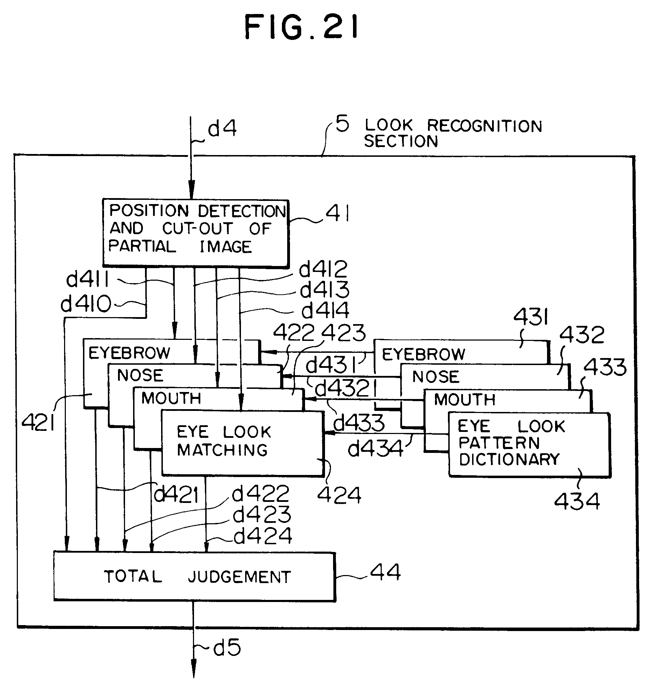

Next, the details of the look recognition unit 5 will be described with reference to Figs. 21 to 23.

Fig. 21 shows the detailed structure of the look recognition unit 5. An input d4 represents a portrait of a sign language user, and output d5 represents a type of emotion and a numerical degree of emotion (e.g., a delight degree of 60%, a grief degree of 10%).

A block 41 shown in Fig. 21 performs a position detection (d410) of the eyes, mouth, nose, and eyebrows of the portrait, and a cut-out of the eye image (d414), mouth image (d413), nose image (d412), and eyebrow image (d411).

Look matching units (424, 423, 422, 421) detect the emotion degrees of the partial images (d424, d423, d422, d421) while referring to the reference look pattern dictionaries (434, 433, 432, 431).

In accordance with these emotion degrees and the emotion degrees to be determined from the positions (d410) of the eye, mouth, nose, and eyebrows, the total judgement unit 44 totally determines the final emotion degree and type and outputs them.

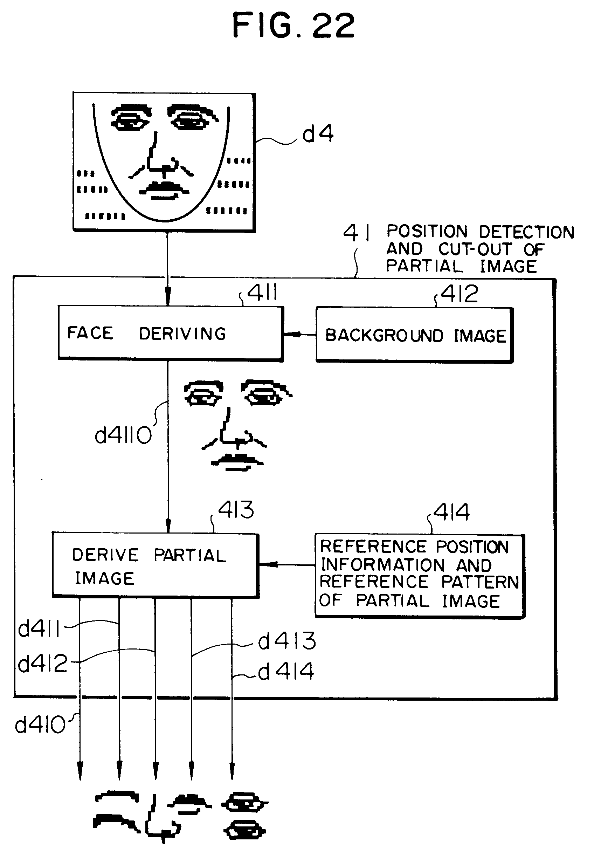

Fig. 22 shows the details of the position detection and image cut-out.

A block 411 derives a face image d4110 without the background of the portrait by obtaining an absolute difference between a pre-registered background 412 and the input portrait d4.

A block 413 first detects the position and size of the total face image d4110 by using an image processing technique such as projection distribution.

The block 413 then detects the position of each partial image such as the eye image, mouth image, nose image, and eyebrow image, through a template matching between the total face image d4110 without background and each standard partial image pattern 414 which is used as a template, while referring to reference position information 414.

In this case, if the reference position information 414 is normalized by the position and size of the detected total face image d4110, the range of the area to be subject to the template matching can be narrowed, realizing an improved precision and efficiency of the matching.

Once the position of each partial image can be detected, the image can be cut out easily. An output d410 represents the position of each partial image, and d414, d413, d412, and d411 represent the eye image, mouth image, nose image, and eyebrow image. respectively.

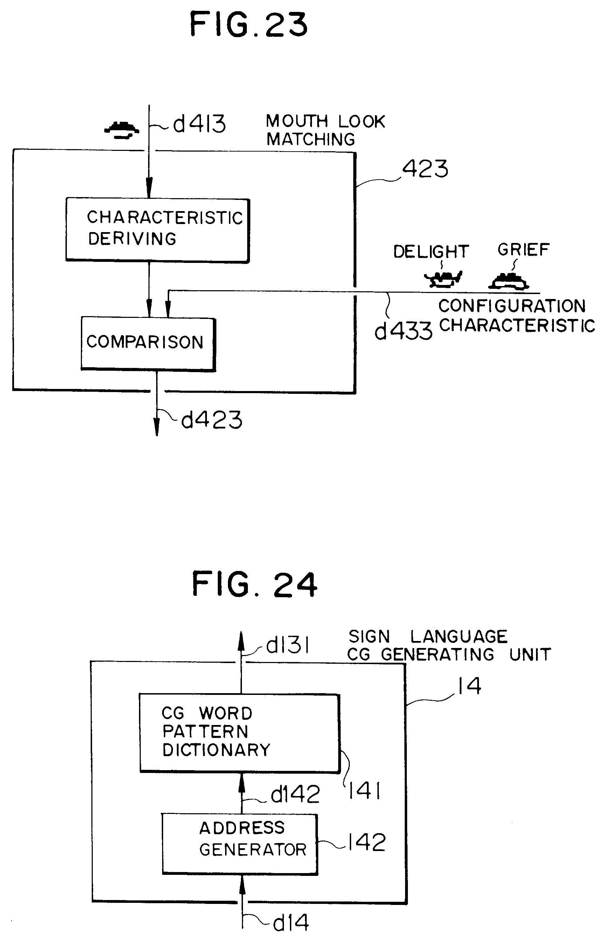

Fig. 23 shows the detailed structure of the mouth matching unit 423 of the look recognition unit 5.

The configuration characteristics of the mouth image d413, such as the area, aspect ratio, and xy projection distribution, are derived by a characteristic deriving unit by an image processing technique.

The configuration characteristics of the mouth image d413 are compared with the pre-registered characteristics such as delighted mouth and sad mouth configurations (through comparison between distances on a configuration characteristic space) to determine the most similar configuration characteristic. Then, data d423 is outputted which represents the type of the emotion belonging to the determined most similar configuration characteristic and the emotion degree in inverse proportion to the distance on the configuration characteristic space.

The total judgement unit 44 of the look recognition unit 5 determines the final emotion type on the majority basis from the emotion types and degrees obtained from the configuration characteristics of respective partial images and from the emotion types and degrees obtained from the coordinate positions of respective partial images. An average of emotion degrees belonging to the same final emotion type is used as the final emotion degree (d5).

In determining the emotion type and degree to be obtained from the coordinate position of each partial image, the coordinate position at each point of a reference emotion image is stored in advance. The sum of differences of coordinate positions at respective points between the input image and reference image is obtained and used for the determination of the emotion type and degree. Namely, the emotion type of the reference image providing the minimum sum of differences is used as the final emotion type, and the emotion degree in inverse proportion to the minimum is used as the final emotion degree.

The data input/output section (6, 7) shown in Fig. 16 will be described next.

This section is used for storing data (1) in a floppy disk or reading it therefrom, the data (1) being original data from the data gloves inputted by a sign language user or the text data converted into a spoken language, and for storing data (2) in the floppy disk 6 or reading it therefrom, the data (2) being the parameters (weight coefficients) of the layer-type neural network of the conversion unit 21 of the sign language recognition section 2.

The read data (1) is sent to the monitor at the speech synthesizing unit or to the monitor at the sign language CG generating unit to display it. The read data (2) of parameters (weight coefficients) is set to the layer-type neural network of the conversion unit 21.

Fig. 24 shows the structure of the sign language CG generating unit 14. Word information indicated by d14 in Fig. 24 is supplied to an address generator 142 which generates the address of a CG word pattern corresponding to the supplied word information. A CG word pattern dictionary sends the designated CG word pattern d131 to the monitor 13 to display it.

Each section of the sign language translation system has been described in detail. With this structure, it is possible to realize the system capable of solving the conventional issues still not settled.

In the embodiment of the sign language translation system 100, wired data transfer has been assumed. All or part of the data transfer may be replaced by wireless data transfer to provide a better operability of the system.

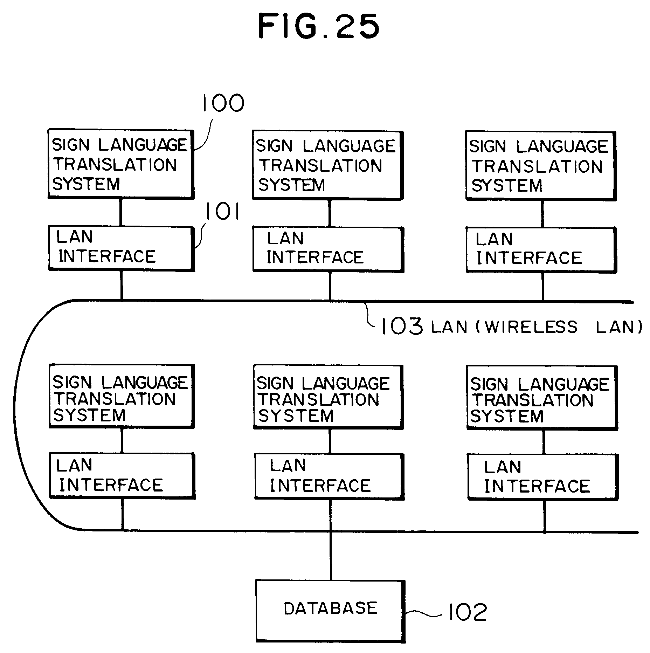

Fig. 25 shows a sign language translation system wherein a plurality of sign language translation systems 100 described above are interconnected by a local area network (LAN) 103 (or wireless LAN) via LAN interfaces 101. With such a system, data communication or an access to a database 102 by sign languages or gestures becomes possible within or between public or other facilities such as hospitals, police stations, and public offices.

According to the embodiment, a continuous sign language even with a personal difference can be dynamically recognized and converted into a spoken language.

It is also possible to recognize the look or emotion of a sign language user, allowing to generate a spoken language with emotion.

It is also possible to make it easy to have a conversation between a sign language user and an ordinary user.

It is apparent that the sign language translation apparatus and system of the second embodiment may be applied to the sign recognition apparatus of the first example.

## Claims

1. A sign language translation system having input means (1, 1') for inputting a continuously expressed sign language as time sequential data, means (2') for recognizing a sign language from said time sequential data, and means (3) for translating said recognized sign language into a spoken language, said sign language recognition means comprising:

   a sign language word dictionary (22) for storing first sign language time sequential data of each sign language word;

   means (21) for calibrating second sign language time sequential data inputted from said input means so as to make said first sign language time sequential data stored in said sign language word dictionary correspond to said second sign language time sequential data;

   means (23) for matching said second sign language time sequential data calibrated by said calibration means with said first sign language time sequential data stored in said sign language word dictionary, and recognizing the sign language word corresponding to said second sign language time sequential data;

   means (4) for inputting a portrait of a sign language user, look recognition means (5) for recognizing the look of the portrait to obtain the emotion type and the emotion degree (intensity), and processor means (16) for A) inputting a spoken language outputted from said spoken language translation means (3) and the emotion type and degree outputted from said look recognition means (5), and B) outputting a spoken language added with emotional adjectives.

2. A sign language translation system according to claim 1, further comprising:

   matching means (24) for receiving said second sign language time sequential data of a sign language word and said first sign language time sequential data corresponding to said second sign language time sequential data, obtaining and outputting correspondences between both said sign language sequential data at each timing; and

   selection means (25) for selecting one of said second sign language time sequential data and an output of said matching means, and outputting said selected one to said calibration means,

   wherein said calibration means learns recognition parameters for the calibration in accordance with an output of said matching means.

3. A sign language translation system according to claim 1, wherein said spoken language translation means (3) adds a dependent word to the sign language word outputted from said sign language recognition means, in accordance with a rule, and outputting a spoken language.

4. A sign language translation system according to claim 1, further comprising sound output means (11, 12) for synthesizing and outputting sounds, wherein said processor means (16) outputs sounds corresponding to the emotion type and degree.

5. A sign language translation system according to claim 1, further comprising text output means (13) for outputting a text, wherein said processor means (16) outputs said text corresponding to the emotion type and degree.

6. A sign language translation system according to claim 1, further comprising sign language graphics means (13, 14) for outputting a sign language as CG, wherein said processor means (16) outputs said CG corresponding to the emotion type and degree.

7. A sign language translation system according to claim 1, further comprising voice input means (9, 10) having a microphone and voice recognition means.

8. A sign language translation system according to claim 1, further comprising character input means (8) for inputting a character from a keyboard.

9. A sign language translation system according to claim 1, wherein said sign language translation system is installed at each of a plurality of stations connected to a local area network so that information can be transferred between a plurality of said sign language translation systems.

**Patentansprüche**

1. Zeichensprachen-Übersetzungssystem, welches ein Eingabemittel (1, 1') zum Eingeben einer kontinuierlich ausgedrückten Zeichensprache als Zeitfolgedaten, ein Mittel (2') zum Erkernen einer Zeichensprache aus den Zeitfolgedaten und ein Mittel (3) zum Übersetzen der erkannten Zeichensprache in eine gesprochene Sprache aufweist, wobei das Zeichensprache-Erkennungs-Mittel aufweist:

ein Zeichensprachen-Wörterbuch (22) zum Speichern erster Zeichensprache-Zeitfolgedaten von jedem Zeichensprachen-Wort;
ein Mittel (21) zum Kalibrieren von zweiter über das Eingabe-Mittel eingegebener Zeichensprache-Zeitfolgedaten, um so die ersten Zeichensprache-Zeitfolgedaten, die in dem Zeichensprachen-Wörterbuch gespeichert sind zu den zweiten Zeichensprache-Zeitfolgedaten entsprechend zu machen;
ein Mittel (23) zum Gleichheitsüberprüfen der durch das Mittel zum Kalibrieren kalibrierten zweiten Zeichensprache-Zeitfolgedaten mit den ersten Zeichensprache-Zeitfolgedaten, welche in dem Zeichensprachen-Wörterbuch gespeichert sind und zum Erkennen des entsprechenden Zeichensprachen-Wortes zu den zweiten Zeichensprache-Zeitfolgedaten;
ein Mittel (4) zum Eingeben eines Porträt von einem Zeichensprachen-Benutzer, Blickerkennungsmittel (5) zum Erkennen des Blickes von dem Porträt zum Erhalten der Emotionsart und des Emotionsgrades (Intensität), und Prozessor-Mittel (16) zum A) Eingeben einer von dem GesprocheneSprache-Übersetzungsmittel (3) ausgegebenen gesprochenen Sprache, und der von dem Blickerkennungsmittel (5) ausgegebenen Emotionsart und Emotionsgrades, und B) Ausgeben einer um emotionale Adjektive erweiterten gesprochenen Sprache.

2. Zeichensprachen-Übersetzungssystem nach Anspruch 1, welches weiter aufweist:

ein Gleichheitsüberprüfungsmittel (24) zum Empfangen der zweiten Zeichensprache-Zeitfolgedaten von einem Zeichensprachenwort und der ersten Zeichensprache-Zeitfolgedaten entsprechend den zweiten Zeichensprache-Zeitfolgedaten, zum Erhalten und zum Ausgeben von Entsprechungen zwischen beiden der Zeichensprache-Zeitfolgedaten bei jeder gewählten Zeit; und
ein Auswaldmittel (25) zum Auswählen einer von den zweiten Zeichensprache-Zeitfolgedaten und eine Ausgabe von dem Gleichheitsüberprüfungsmittel und zum Ausgeben dieser Ausgewählten an das Mittel zum Kalibrieren,
wobei das Mittel zum Kalibrieren Erkennungsparameter für das Kalibrieren in Übereinstimmung mit einer Ausgabe des Gleichheitsüberprüfungsmittels erlernt.

3. Zeichensprachen-Übersetzungssystem nach Anspruch 1, wobei das Gesprochene-Sprache-Übersetzungsmittel (3) ein abhängiges Wort zu dem von dem Zeichensprachen-Erkennungsmittel ausgegebenen Wort hinzufügt in Übereinstimmung mit einer Regel und zum Ausgeben einer gesprochenen Sprache.

4. Zeichensprachen-Übersetzungssystem nach Anspruch 1, weiter aufweisend Klang-Ausgabe-Mittel (11, 12) zum Synthetisieren und Ausgeben von Klängen, wobei das Prozessormittel (16) die zu der Emotionsart und dem Grad der Emotion entsprechenden Klänge ausgibt.

5. Zeichensprachen-Übersetzungssystem nach Anspruch 1, weiter aufweisend Text-Ausgabe-Mittel (13) zum Ausgeben eines Textes, wobei das Prozessormittel (16) den zu der Emotionsart und dem Grad der Emotion entsprechenden Text ausgibt.

6. Zeichensprachen-Übersetzungssystem nach Anspruch 1, weiter aufweisend Zeichensprachen-Grafik-Mittel (13, 14) zum Ausgeben einer Zeichensprache als CG, wobei das Prozessormittel (16) die zu der Emotionsart und dem Grad der Emotion entsprechende CG ausgibt.

7. Zeichensprachen-Übersetzungssystem nach Anspruch 1, weiter aufweisend Sprach-Eingabemittel (9, 10), die ein Mikrofon und Spracherkennungsmittel aufweisen.

8. Zeichensprachen-Übersetzungssystem nach Anspruch 1, weiter aufweisend Zeichen-Eingabemittel (8) zum Eingeben eines Zeichens von einer Tastatur.

9. Zeichensprachen-Übersetzungssystem nach Anspruch 1, wobei das Zeichensprachen-Übersetzungssystem installiert ist auf jeder von einer Mehrzahl von Stationen, welche mit einem lokalen Gebietsnetzwerk verbunden sind, so daß Information zwischen einer Mehrzahl von den Zeichensprachen-Übersetzungssystemen übermittelt werden kann.

**Revendications**

1. Système de traduction de langage des signes comportant des moyens d'entrée (1, 1') pour entrer un langage des signes exprimé d'une manière continue sous la forme de données séquentielles, des moyens (2') pour reconnaître un langage des signes à partir desdites données séquentielles, et des moyens (3) pour traduire ledit langage des signes reconnu en un langage parlé, lesdits moyens de reconnaissance de langage des signes comportant :

    un dictionnaire de mots de langage des signes (22) pour mémoriser des premières données séquentielles de langage des signes de chaque mot de langage des signes ;
    des moyens (21) pour calibrer des secondes données séquentielles de langage des signes entrées à partir desdits moyens d'entrée de manière à obtenir que lesdites premières données séquentielles de langage des signes mémorisées dans ledit dictionnaire de mots de langage des signes correspondent auxdites secondes données séquentielles de langage des signes ;
    des moyens (23) pour confronter lesdites secondes données séquentielles de langage des signes calibrées par lesdits moyens de calibrage auxdites premières données séquentielles de langage des signes mémorisées dans ledit dictionnaire de mots de langage des signes, et reconnaître le mot de langage des signes correspondant auxdites secondes données séquentielles de langage des signes ;
    des moyens (4) pour entrer un portrait d'un utilisateur de langage des signes, des moyens de reconnaissance de physionomie (5) pour reconnaître la physionomie du portrait afin d'obtenir le type d'émotion et le degré d'émotion (intensité), et des moyens de traitement (16) pour A) recevoir en entrée un langage parlé délivré en sortie par lesdits moyens de traduction de langage des signes (3) et le type et le degré d'émotion délivrés en sortie par lesdits moyens de reconnaissance de physionomie (5), et B) délivrer en sortie un langage parlé complété par des adjectifs émotionnels.

2. Système de traduction de langage des signes selon la revendication 1, comportant en outre :

    des moyens de confrontation (24) pour recevoir lesdites secondes données séquentielles de langage des signes d'un mot de langage des signes et lesdites premières données séquentielles de langage des signes correspondant auxdites secondes données séquentielles de langage des signes, obtenir et délivrer en sortie des correspondances entre les deux ensembles de données séquentielles de langage des signes à chaque instant ; et
    des moyens de sélection (25) pour sélectionner lesdites secondes données séquentielles de langage des signes ou une sortie desdits moyens de confrontation, et envoyer ce qui a été sélectionné auxdits moyens de calibrage,
    dans lequel lesdits moyens de calibrage apprennent des paramètres de reconnaissance pour le calibrage conformément à une sortie desdits moyens de confrontation.

3. Système de traduction de langage des signes selon la revendication 1, dans lequel lesdits moyens de traduction de langage parlé (3) ajoutent un mot dépendant au mot de langage des signes délivré en sortie par lesdits moyens de reconnaissance de langage des signes, conformément à une règle, et délivrent en sortie un langage parlé.

4. Système de traduction de langage des signes selon la revendication 1, comportant en outre des moyens d'émission sonore (11, 12) pour synthétiser et émettre des sons, dans lequel lesdits moyens de traitement (16) émettent des sons correspondant au type et au degré d'émotion.

**5.** Système de traduction de langage des signes selon la revendication 1, comportant en outre des moyens de délivrance de texte (13) pour délivrer un texte, dans lequel lesdits moyens de traitement (16) délivrent ledit texte correspondant au type et au degré d'émotion.

**6.** Système de traduction de langage des signes selon la revendication 1, comportant en outre des moyens de graphismes de langage des signes (13, 14) pour délivrer un langage des signes sous la forme de graphismes, dans lequel lesdits moyens de traitement (16) délivrent ledit graphisme correspondant au type et au degré d'émotion.

**7.** Système de traduction de langage des signes selon la revendication 1, comportant en outre des moyens d'entrée vocale (9, 10) ayant un microphone et des moyens de reconnaissance vocale.

**8.** Système de traduction de langage des signes selon la revendication 1, comportant en outre des moyens d'entrée de caractère (8) pour entrer un caractère à partir d'un clavier.

**9.** Système de traduction de langage des signes selon la revendication 1, dans lequel ledit système de traduction de langage des signes est installé dans chacune des stations d'une pluralité de stations reliées à un réseau local de sorte que des informations puissent être transférées entre une pluralité desdits systèmes de traduction de langage des signes.

# FIG. 1

SIGN LANGUAGE
2  RECOGNITION UNIT

DATA GLOVES

I'  INTERFACE UNIT

d1a

REFERENCE SIGN
LANGUAGE PATTERN     26
GENERATING UNIT

d26

REFERENCE SIGN
LANGUAGE PATTERN     27
STORAGE UNIT

d27

CONTINUOUS SIGN        d2
LANGUAGE
RECOGNITION UNIT       28

d1b

EP 0 585 098 B1

# FIG. 2

SIGN LANGUAGE PATTERN → d1a → **261** AVERAGE TIME LENGTH CALCULATING UNIT

**264** MATCHING UNIT → d265 → **265** AVERAGE PATTERN CALCULATING UNIT → d266 → **266** PATTERN COMPRESSION UNIT → d26 → REFERENCE SIGN LANGUAGE PATTERN

d261 **262** PREREFERENCE PATTERN STORAGE UNIT

d263

d262 **263** SAMPLE STORAGE UNIT

d264

26

EP 0 585 098 B1

# FIG. 3

# FIG. 4A    FIG. 4B

# FIG. 5

266

INPUT PATTERN
(AVERAGE SIGN
LANGUAGE PATTERN)

d266  2661

| VELOCITY CALCULATING UNIT |

2662

| MINIMUM VELOCITY DETECTING UNIT |

d2661

2665

| CHARACTERIS-TIC POINT VECTOR OUTPUT UNIT |

COMPRESSED SIGN
LANGUAGE PATTERN

| VELOCITY CHANGE CALCULATING UNIT |

| VELOCITY CHANGE POINT DE-TECTING UNIT |

d2662      d26

2663       2664

# FIG. 6

y

x   INPUT PATTERN

# FIG. 7

INPUT PATTERN → d1b → **281** PATTERN COMPRES-SION UNIT → d281 → **282** MATCHING UNIT → d282 → **283** REFERENCE PATTERN CANDIDATE DETECTING UNIT → d2 → REFERENCE PATTERN CANDIDATE

**28**

d27 ↑

REFERENCE SIGN LANGUAGE PATTERN STORAGE UNIT — **27**

# FIG. 8

1, 2 --- INDICATING WEIGHT OF EACH PATH

# FIG. 9

# FIG. 10

t1 (i) : TIME LENGTH AT i-TH CHARACTERISTIC
POINT OF CONTINUOUS PATTERN

t2 (j) : TIME LENGTH AT j-TH CHARACTERISTIC
POINT OF REFERENCE PATTERN

# FIG. II

CONTINUOUS PATTERN

# FIG. I2

REFERENCE PATTERN

CONTINUOUS PATTERN

# FIG. 13

REFERENCE PAT-
TERN GENERATION

ALL WORDS
PROCESSED ? — 1301

Y → END

N

CALCULATE AVERAGE
TIME LENGTH OF SAMPLE
PATTERNS — 1302

SET SAMPLE PATTERN HAVING
TIME LENGTH NEAREST AVERAGE
TIME LENGTH TO PRE-REFERENCE
PATTERN — 1303

REMAINING
SAMPLE
PRESENT ? — 1304

N →

Y — 1305

PERFORM DP MATCHING
BETWEEN PRE-REFERENCE
PATTERN AND SAMPLE
PATTERN

DIVIDE DATA AT EACH TIM-
ING OF PRE-REFERENCE
PATTERN BY NUMBER OF
ADDITIONS OF DATA TO
OBTAIN AVERAGE DATA AND
REFERENCE PATTERN — 1307

ADD DATA AT EACH TIMING OF
SAMPLE PATTERN TO DATA AT
CORRESPONDING TIME OF PRE-
REFERENCE PATTERN, AND STORE
NUMBER OF ADDITIONS OF DATA
AT EACH TIMING — 1306

COMPRESS REFERENCE
PATTERN — 1308

# FIG. 14

```
        ( PATTERN
          COMPRESSION )
              │
              ▼
┌──────────────────────┐
│ OBTAIN VELOCITY VECTOR│
│ AT EACH TIMING OF    │─── 1401
│ INPUTTED REFERENCE   │
│ PATTERN              │
└──────────────────────┘
              │
              ▼         1402
         ╱‾‾‾‾‾‾‾‾╲
        ╱  LAST VECTOR ╲──── Y
        ╲  DATA ?     ╱
         ╲_____╱
              │ N
              ▼
```

1403 ── MINIMUM VECTOR DATA ?  N

Y ── 1404

┌──────────────────────┐
│ STORE MINIMUM VEC-   │
│ TOR DATA TIME AS     │
│ CHARACTERISTIC       │
│ POINT                │
└──────────────────────┘

1405
┌──────────────────────┐
│ OBTAIN ANGLE         │
│ CHANGE OF            │
│ VELOCITY VECTOR      │
└──────────────────────┘

1406
┌──────────────────────┐
│ ADD ANGLE CHANGE     │
└──────────────────────┘

1407
ACCUMULATED ANGLE CHANGE EXCEEDS THRESHOLD VALUE ?   N

Y ── 1408
┌──────────────────────┐
│ STORE TIME AS        │
│ CHARACTERISTIC       │
│ POINT                │
└──────────────────────┘

1409
┌──────────────────────┐
│ CLEAR ACCUMULATED    │
│ ANGLE CHANGE         │
└──────────────────────┘

1410
┌──────────────────────┐
│ STORE PATTERN        │
│ VECTOR AT EACH       │
│ CHARACTERISTIC       │
│ POINT AND EACH       │
│ TIME LENGTH          │
│ BETWEEN CHARAC-      │
│ TERISTIC POINTS,     │
│ AS COMPRESSED        │
│ PATTERN              │
└──────────────────────┘
              │
              ▼
         ( END )

# FIG. 15

```
        ┌─────────────┐
        │    SIGN     │
        │  LANGUAGE   │
        │ RECOGNITION │
        └─────────────┘
               │
               ▼
  ┌──────────────────────────┐
  │ INPUT  SIGN   LANGUAGE   │──── 1501
  │ PATTERN                  │
  └──────────────────────────┘
               │
               ▼
  ┌──────────────────────────┐
  │ COMPRESS   SIGN          │──── 1502
  │ LANGUAGE   PATTERN       │
  └──────────────────────────┘
               │
               ▼
          ╱─────────╲        1503
        ╱   ALL  REFERENCE  ╲      Y
      ╱   PATTERNS  CHECKED   ╲────────┐
        ╲        ?          ╱          │
          ╲───────────────╱            ▼
               │ N                 ┌───────┐
               ▼                   │  END  │
  ┌──────────────────────────┐    └───────┘
  │ PERFORM CONTINUOUS DP MATCHING│
  │ BETWEEN   INPUTTED  PATTERN   │── 1504
  │ AND REFERENCE     PATTERN     │
  └──────────────────────────┘
               │
               ▼
  ┌──────────────────────────┐
  │ OBTAIN  MINIMUM VALUE    │
  │ OF  ACCUMULATED          │──── 1505
  │ DISTANCE                 │
  └──────────────────────────┘
               │
               ▼
  ┌──────────────────────────┐
  │ STORE  TIME  AT  MINIMUM │
  │ VALUE  AS   POSITION  OF │──── 1506
  │ RECOGNIZED  WORD         │
  └──────────────────────────┘
```

# FIG. 16

# FIG.17

2 SIGN LANGUAGE RECOGNITION SECTION

d1

25

SELECTOR

d24

21

CONVERSION UNIT

d25

24

MATCHING UNIT (1)

22

SIGN LANGUAGE WORD DICTIONARY STORAGE UNIT

d21

d22

MATCHING UNIT (2)

23

d2

# FIG. 18

# FIG. 19

TIME SEQUENTIAL MULTIDIMENSIONAL FUNCTION P(t)

SIGN LANGUAGE WORD DICTIONARY DATA

TIME SEQUENTIAL MULTIDIMENSIONAL FUNCTION P(t)

MATCHING UNIT (I)

END POINT FIXED DYNAMIC MATCHING

P(A) CORRESPONDS TO p(a)
P(B) CORRESPONDS TO p(b)
P(C) CORRESPONDS TO p(c)
P(D) CORRESPONDS TO p(d)
P(E) CORRESPONDS TO p(e)
P(F) CORRESPONDS TO p(f)
P(G) CORRESPONDS TO p(g)

# FIG. 20

DETECTED SIGN LANGUAGE WORD

# FIG. 21

# FIG. 22

41 POSITION DETECTION
AND CUT-OUT OF
PARTIAL IMAGE

411 FACE DERIVING

412 BACKGROUND IMAGE

d4110

413 DERIVE PARTIAL IMAGE

414 REFERENCE POSITION INFORMATION AND REFERENCE PATTERN OF PARTIAL IMAGE

d411
d412
d413
d414

d410

# FIG.23

MOUTH LOOK
MATCHING

~d413

423

CHARACTERISTIC
DERIVING

DELIGHT    GRIEF

CONFIGURATION
d433 CHARACTERISTIC

COMPARISON

~d423

# FIG. 24

SIGN LANGUAGE
CG GENERATING UNIT

~d131

14

CG WORD
PATTERN
DICTIONARY

141

~d142

ADDRESS
GENERATOR

142

~d14

# FIG.25

100

| SIGN LANGUAGE TRANSLATION SYSTEM | | SIGN LANGUAGE TRANSLATION SYSTEM | | SIGN LANGUAGE TRANSLATION SYSTEM |

101

| LAN INTERFACE | | LAN INTERFACE | | LAN INTERFACE |

103 LAN (WIRELESS LAN)

| SIGN LANGUAGE TRANSLATION SYSTEM | | SIGN LANGUAGE TRANSLATION SYSTEM | | SIGN LANGUAGE TRANSLATION SYSTEM |

| LAN INTERFACE | | LAN INTERFACE | | LAN INTERFACE |

| DATABASE | 102